# EUROPÄISCHE PATENTSCHRIFT

(11) **EP 0 458 741 B1**
(45) Veröffentlichungstag und Bekanntmachung des Hinweises auf die Patenterteilung: **24.01.1996**
(21) Anmeldenummer: 91810333.4
(22) Anmeldetag: 30.04.1991
(51) Int. Cl.: C09D 7/12, C08K 5/3492

(54) **Strahlenhärtbare lichtstabilisierte Zusammensetzungen**
Radiation curable light stabilised compositions
Compositions durcissables par rayonnement et stabilisées à la lumière

(30) Priorität: 10.05.1990 CH 1588/90
(43) Veröffentlichungstag der Anmeldung: 27.11.1991
(73) Patentinhaber: CIBA-GEIGY AG, CH-4002 Basel (CH)
(72) Erfinder: Valet, Andreas, Dr., W-7859 Eimeldingen (DE); Köhler, Manfred, Dr., W-7800 Freiburg (DE)

(56) Entgegenhaltungen:
- EP-A- 0 442 847
- GB-A- 975 966
- US-A- 3 268 474

## Beschreibung

Die Erfindung betrifft eine strahlenhärtbare lichtstabilisierte Zusammensetzung auf Basis eines ethylenisch ungesättigten Bindemittels und mindestens eines UV-Absorbers vom Typ der 2-Hydroxyphenyl-s-triazine. Die Erfindung betrifft ferner die Verwendung solcher Zusammensetzungen als Überzugsmittel und ein Verfahren zur Strahlenhärtung dieser Überzugsmittel.

Es ist bekannt, daß UV-Absorber die Photopolymerisation ethylenisch ungesättigter Verbindungen verzögern. Wird dabei, wie üblich, ein Photoinitiator verwendet, so spielt die Wellenlänge der UV-Absorption des Photoinitiators und des UV-Absorbers eine Rolle. So wurden in der DE-A- 694 253 als Photoinitiatoren Benzoinether sekundärer Alkohole vorgeschlagen, die sich mit kleinen Mengen an UV-Absorbern mit Absorptionsmaxima bei 315-320 nm gut kombinieren lassen. Als UV-Absorber werden dort Derivate des 2-Hydroxybenzophenon, der α-Cyanoacrylsäure und des 2-Hydroxyphenylbenztriazols vorgeschlagen. UV-Absorber vom Oxalanilid-Typ wurden im US-A-4 833 038 für strahlenhärtbare Acrylatharze vorgeschlagen.

Es wurde weiterhin vorgeschlagen, anstelle von UV-Absorbern Lichtschutzmittel aus der Klasse der Polyalkylpiperidine zu verwenden, die bekanntlich im UV-Bereich nicht absorbieren. Diese Amin-Lichtschutzmittel neigen jedoch zu Verfärbungen in Gegenwart von Carbonyltyp-Photoinitiatoren und können deshalb nur in Verbindung mit speziellen Initiatoren eingesetzt werden, siehe z.B. EP-A-7059.

Es wurde nunmehr gefunden, daß UV-Absorber aus der Klasse der 2-Hydroxyphenyl-s-triazine als Lichtschutzmittel für strahlenhärtbare Systeme sehr geeignet sind. Sie verlangsamen die Härtungsgeschwindigkeit, insbesondere in Konzentrationen bis zu 5% nicht in nennenswertem Maße. Sie geben keine Verfärbungen oder zumindest weniger Verfärbung als andere UV-Absorber und Piperidin-Lichtschutzmittel. Auch bei Kombination mit sterisch gehinderten Aminen sind die Verfärbungen geringer als bei anderen UV-Absorbern. Auch bei der Elektronenstrahlhärtung, bei der üblicherweise keine Initiatoren zugesetzt werden, tritt weniger Verfärbung ein als mit anderen Lichtschutzmitteln.

Die Erfindung betrifft daher eine strahlenhärtbare lichtstabilisierte Zusammensetzung enthaltend
A) mindestens ein ethylenisch ungesättigtes Bindemittel und
B) mindestens einen UV-Absorber der Formel I 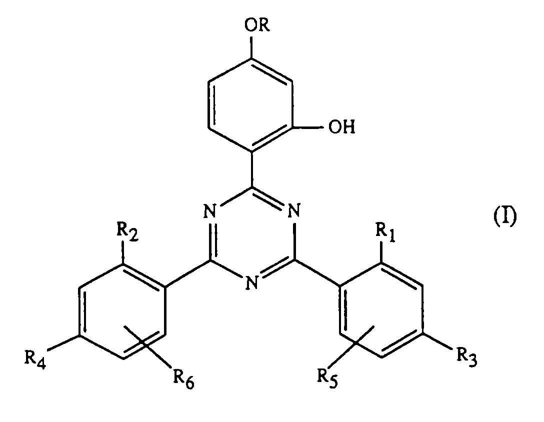
   worin R Wasserstoff oder C₁-C₁₈-Alkyl bedeutet,
   R₁ und R₂ unabhängig voneinander H, OH, C₁-C₁₂-Alkyl, Halogen oder Halogenmethyl bedeuten,
   R₃ und R₄ unabhängig voneinander H, OH, C₁-C₁₂-Alkyl, C₁-C₁₈Alkoxy oder Halogen bedeuten und
   R₅ und R₆ unabhängig voneinander H, C₁-C₁₂-Alkyl oder Halogen bedeuten.

Wenn R₁, R₂, R₃, R₄, R₅ oder R₆ C₁-C₁₂-Alkyl bedeuten, so kann dies lineares oder verzweigtes Alkyl sein, wie z.B. Methyl, Ethyl, n-Propyl, iso-Propyl, n-Butyl, iso-Butyl, sec-Butyl, tert-Butyl, n-Amyl, n-Hexyl, 2-Ethylbutyl, n-Octyl, 2-Ethylhexyl, tert-Butyl, iso-Nonyl, n-Decyl, n-Undecyl oder n-Dodecyl. Bevorzugt sind diese Substituenten C₁-C₄-Alkyl, insbesondere Methyl.

R als C₁-C₁₈-Alkyl kann darüber hinaus auch ein höherer Alkylrest sein, wie z.B. Tetradecyl, Hexadecyl oder Octadecyl. Bevorzugt ist R C₁-C₁₂-Alkyl.

R₃ und R₄ als C₁-C₁₈-Alkoxy sind bevorzugt C₁-C₄-Alkoxy, wie z.B. Methoxy, Ethoxy oder Butoxy. R₁ und R₂ als Halogenmethyl ist insbesondere Trifluorrnethyl. R₁ bis R₆ als Halogen sind insbesondere Chlor.

Bevorzugt sind Zusammensetzungen enthaltend eine Verbindung der Formel I, worin R Wasserstoff oder C₁-C₁₂-Alkyl ist, R₁ und R₂ unabhängig voneinander H, OH, Halogen oder C₁-C₄-Alkyl bedeuten, R₃ und R₄ unabhängig voneinander H, OH, C₁-C₄-Alkyl, C₁-C₄-Alkoxy oder Halogen bedeuten und R₅ und R₆ unabhängig voneinander H oder C₁-C₄-Alkyl bedeuten.

Besonders bevorzug sind Zusammensetzungen, die eine Verbindung der Formel I enthalten, worin R Wasserstoff oder C₁-C₁₂-Alkyl ist, R₁, R₂, R₃ und R₄ unabhängig voneinander H, CH₃ oder Cl bedeuten und R₅ und R₆ Wasserstoff sind.

Diese Verbindungen sind seit langem als UV-Absorber bekannt und wurden als Lichtschutzmittel für polymere Materialien vorgeschlagen, z.B. im US-A-3 118 887 oder US-A-3 268 474. Ihre Verwendung in Filmen, Überzugsmitteln und Formmassen in Kombination mit sterisch gehinderten Aminen ist im US-A-4 619 956 beschrieben.

Das ethylenisch ungesättigte Bindemittel ist ein Bindemittel, wie es üblicherweise bei Strahlenpolymerisationen verwendet wird. Es enthält mindestens eine, vorzugsweise mehrere ethylenisch ungesättigte Verbindungen. Die ungesättigten Verbindungen können eine oder mehrere olefinische Doppelbindungen enthalten. Sie können niedermolekular (monomer) oder höhermolekular (oligomer) sein. Beispiele für Monomere mit einer Doppelbindung sind Alkyl- oder Hydroxyalkyl-acrylate oder -methacrylate, wie z.B. Methyl-, Ethyl-, Butyl-, 2-Ethylhexyl- oder 2-Hydroxyethylacrylat, Isobornylacrylat, Methyl- oder Ethylmethacrylat. Weitere Beispiele hierfür sind Acrylnitril, Acrylamid, Methacrylamid, N-substituierte (Meth)acrylamide, Vinylester wie Vinylacetat, Vinylether wie Isobutylvinylether, Styrol, Alkyl- und Halogenstyrole, N-Vinylpyrrolidon, Vinylchlorid oder Vinylidenchlorid.

Beispiele für Monomere mit mehreren Doppelbindungen sind Ethylenglykol-, Propylenglykol-, Neopentylglykol-, Hexamethylenglykol-, oder Bisphenol-A-diacrylat, 4,4'-Bis(2-acryloyloxyethoxy)-diphenylpropan, Trimethylolpropan-triacrylat, Pentaerythrit-triacrylat oder -tetraacrylat, Vinylacrylat, Divinylbenzol, Divinylsuccinat, Diallylphthalat, Triallylphosphat, Triallylisocyanurat oder Tris-(2-acryloyloxyethyl)isocyanurat.

Beispiele für höhermolekulare (oligomere) mehrfach ungesättigte Verbindungen sind acrylierte Epoxidharze, acrylierte Polyether, acrylierte Polyurethane oder acrylierte Polyester. Weitere Beispiele für ungesättigte Oligomere sind ungesättigte Polyesterharze, die meist aus Maleinsäure, Phthalsäure und einem oder mehreren Diolen hergestellt werden und Molekulargewichte von etwa 500 bis 3000 besitzen. Solche ungesättigte Oligomere kann man auch als Prepolymere bezeichnen.

Häufig verwendet man Zweikomponenten-Gemische eines Prepolymeren mit einem mehrfach ungesättigten Monomeren oder Dreikomponentengemische, die außerdem noch ein einfach ungesättigtes Monomer enthalten. Das Prepolymere ist hierbei in erster Linie für die Eigenschaften des Lackfilmes maßgebend, durch seine Variation kann der Fachmann die Eigenschaften des gehärteten Filmes beeinflussen. Das mehrfach ungesättigte Monomere fungiert als Vernetzer, das den Lackfilm unlöslich macht. Das einfach ungesättigte Monomere fungiert als reaktiver Verdünner, mit dessen Hilfe die Viskosität herabgesetzt wird, ohne daß man ein Lösungsmittel verwenden muß.

Solche Zwei- und Dreikomponentensysteme auf der Basis eines Prepolymeren werden sowohl für Druckfarben als auch für Lacke, Photoresists oder andere strahlenhärtbare Massen verwendet. Als Bindemittel für Druckfarben werden vielfach auch Einkomponenten-Systeme auf der Basis photohärtbarer Prepolymerer verwendet.

Ungesättigte Polyesterharze werden meist in Zweikomponentensystemen zusammen mit einem einfach ungesättigten Monomer, vorzugsweise mit Styrol, verwendet. Für Photoresists werden oft spezifische Einkomponentensysteme verwendet, wie z.B. Polymaleinimide, Polychalkone oder Polyimide, wie sie in der DE-OS 2 308 830 beschrieben sind.

Die ungesättigten Verbindungen können auch im Gemisch mit nicht-photopolymerisierbaren filmbildenden Komponenten verwendet werden. Diese können z.B. physikalisch trocknende Polymere bzw. deren Lösungen in organischen Lösungsmitteln sein, wie z.B. Nitrocellulose oder Celluloseacetobutyrat. Diese können aber auch chemisch bzw. thermisch härtbare Harze sein, wie z.B. Polyisocyanate, Polyepoxide oder Melaminharze. Die Mitverwendung von thermisch härtbaren Harzen ist für die Verwendung in sogenannten Hybrid-Systemen von Bedeutung, die in einer ersten Stufe photopolymerisiert werden und in einer zweiten Stufe durch thermische Nachbehandlung vernetzt werden.

Die erfindungsgemäßen Zusammensetzungen enthalten vorzugsweise 0,01 bis 5 Gew.-%, insbesondere 0,1 bis 2 Gew.-%, bezogen auf das Bindemittel, des UV-Absorbers der Formel I.

Sofern die Zusammensetzungen mit kurzwelligem Licht gehärtet werden, setzt man ihnen zweckmäßigerweise mindestens einen Photoinitiator zu. Es sind heute eine Reihe verschiedener Photoinitiatoren für radikalisch härtbare Systeme erhältlich. Dazu gehören Benzophenon und Benzophenonderivate, Benzoinether, Benzilketale, Dialkoxyacetophenone, α-Hydroxyacetophenone, α-Aminoacetophenone, α-Halogenacetophenone oder Aroylphosphinoxide. Sie unterschieden sich durch verschiedene Absorptionsmaxima. Zur Abdeckung eines breiten Absorptionsbereiches kann man ein Gemisch von zwei oder mehreren Photoinitiatoren verwenden.

Zur Beschleunigung der Photopolymerisation können Amine zugesetzt werden, wie z.B. Triethanolamin, N-Methyl-diethanolamin, p-Dimethylaminobenzoesäure-ethylester oder Michler's Keton. Ein Beschleunigung der Photopolymerisation kann weiterhin durch Zusatz von Photosensibilisatoren geschehen, welche die spektrale Empfindlichkeit verschieben bzw. verbreitern. Beispiele hierfür sind Thioxanthon-, Anthrachinon- und 3-Acylcumarinderivate sowie 3-(Aroylmethylen)-thiazoline.

Als Strahlenquellen für kurzwelliges Licht sind z.B. Quecksilber-mitteldruckstrahler, -hochdruckstrahler oder -niederdruckstrahler, superaktinische Leuchtstoffröhren, Metallhalogenidlampen oder Laser geeignet, deren Emissionsmaxima im Bereich von 250-450 µm liegen.

Der Photoinitiator bzw. das Photoinitiatorgemisch wird vorzugsweise in einer Menge von 0,1 bis 10 Gew.-%, insbesondere 0,5 bis 5 Gew.-%, bezogen auf das Bindemittel, verwendet.

Sofern die Zusammensetzungen mit Elektronenstrahlen gehärtet werden, sind keine Initiatoren oder Beschleuniger nötig. Es gibt hierzu eine Reihe von Bestrahlungsgeräten, die etwa bei 100-400 kV Spannung und 10-100 mA Stromstärke arbeiten. Vorzugsweise geschieht die Elektronenstrahlhärtung in einer Inertgas-Atmosphäre.

Außer den UV-Absorbern der Formel I können auch noch Lichtschutzmittel aus der Klasse der sterisch gehinderten Amine zugesetzt werden, insbesondere solche aus der Klasse der 2,2,6,6-Tetramethylpiperidine. Solche Lichtschutzmittel absorbieren nicht im UV-Bereich. Es sind eine Reihe solcher Lichtschutzmittel im Handel erhältlich, wie z.B. das Di(2,2,6,6-tetramethyl-4-piperidyl)-sebacat, Di(1,2,2,6,6-pentamethyl-4-piperidyl)-sebacat, Di(1-octyloxy-2,2,6,6-tetramethyl-4-piperidyl)-sebacat oder der Di(1,2,2,6,6-pentamethyl-4-piperidyl)-ester der α-(3,5-Di-tert.butyl-4-hydroxybenzyl)-butylmalonsäure. Bevorzugte Gruppen und weitere Beispiele für verwendbare sterisch gehinderte Amine sind in der EP-A-356 677 auf den Seiten 3-25 aufgeführt. Dieser Teil der genannten EP-A wird als Offenbarungsteil der vorliegenden Beschreibung betrachtet.

Für bestimmte Zwecke kann es von Vorteil sein, ein Gemisch von zwei oder mehr sterisch gehinderten Aminen zuzusetzen. Die Menge an sterisch gehindertem Amin oder Amingemisch beträgt vorzugsweise 0,01 bis 5 Gew.-%, insbesondere 0,1 bis 1 Gew.-%, bezogen auf das Bindemittel.

Weitere Zusätze zum strahlenhärtbaren Gemisch können z.B. Polymerisationsinhibitoren, Füllstoffe, Pigmente, Lösungsmittel, Antioxidantien, Phosphite, Metalldesaktivatoren oder Verlaufhilfsmittel sein.

Die erfindungsgemäßen strahlenhärtbaren Zusammensetzungen können für verschiedene Zwecke verwendet werden. In erster Linie ist ihre Verwendung als Überzugsmittel von Bedeutung. Diese können pigmentiert oder metallisiert sein, bevorzugt ist jedoch die Verwendung in klaren Überzügen. Solche Überzüge können auf verschiedene Materialien aufgebracht werden, z.B. auf Papier, Holz, Metall, Kunststoffen, Glas oder keramischen Massen. Auch als klare Deckschicht für Mehrschicht-Überzüge sind die erfindungsgemäßen Zusammensetzungen von großem Interesse, da sie die darunterliegenden Schichten gegen UV-Licht schützen.

Weitere Einsatzgebiete sind strahlenhärtbare Photoresists und gedruckte Schaltungen sowie Bildaufzeichungsverfahren.

Das Aufbringen der strahlenhärtbaren Überzüge auf die Substrate kann nach den üblichen Verfahren erfolgen, z.B. durch Streichen, Sprühen, Tauchen oder Beschichten. Auch ein Aufbringen in mehreren Schichten ist möglich.

Sofern zum Aufbringen ein Lösungsmittel zugesetzt wird, läßt man dieses zweckmäßigerweise vor der Härtung verdunsten. Anschließend geschieht die Härtung durch Bestrahlung mit kurzwelligem Licht oder Elektronenstrahlen. Die Härtungszeiten betragen im allgemeinen einige Sekunden, sie können aber auch kürzer oder länger sein.

Die nachstehenden Beispiele erläutern die Erfindung näher ohne sie auf die Beispiele beschränken zu wollen. Darin bedeuten Teile Gewichtsteile und Prozente Gewichtsprozente.

In den Beispielen werden folgende UV-Absorber verwendet:
A) Erfindungsgemäss 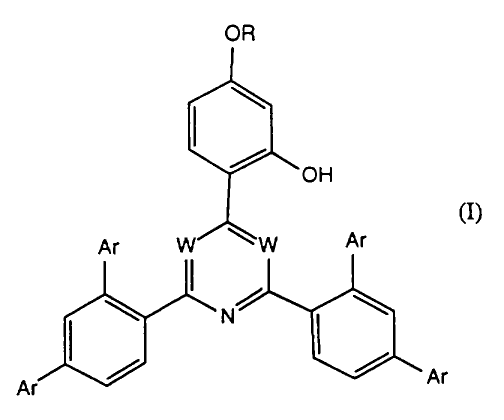
   - UV-1 : R = H: Ar = CH₃
   - UV-2 : R = C₈H₁₇: Ar = CH₃
   - UV-3 : R = C₃H₇: Ar = H
   - UV-4 : R = C₈H₁₇: Ar = H
   - UV-5 : R = C₁₂H₂₅: Ar = H
   - UV-6 : R = C₁₈H₃₇: Ar = H
B) Vergleichsverbindungen
   V-1:2-(2-Hydroxy-3,5-di-tert.amyl-phenyl)-benztriazol 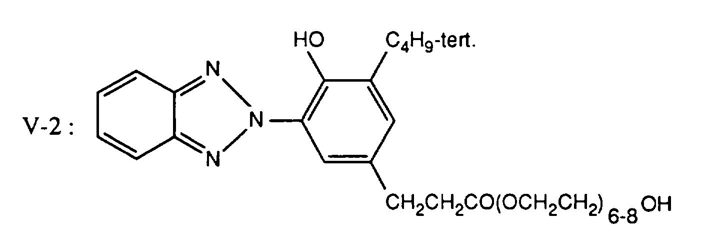
   V-3 : 2,4-Dihydroxybenzophenon
   V-4 : 2-Hydroxy-4-dodecyloxybenzophenon
   V-5 : N-Ethoxyphenyl-N'-(4-isododecylphenyl)-oxalamid
   V-6 : 2-Ethylhexyl-2-cyano-3,3-diphenylacrylat

### Beispiel 1 - Elektronenstrahlhärtung eines Klarlackes

Es wird ein Klarlack bereitet aus 70 Teilen eines Tris(hydroxyethyl)isocyanuratacrylates (Genomer ® T930, Fa. Mäder, CH) und 30 Teilen 1,6-Hexandioldiacrylat. Dazu wird 1 Teil der in der Tabelle 1 angegebenen UV-Absorber zugegeben. Die Lackproben werden auf mit weißem Coil-coat beschichtete Aluminiumbleche aufgetragen und in einem Elektronenstrahl-Gerät (der Fa. Charmilles, Division Energy Sciences International, Genf) mit einer Dosis von 3 Mrad bestrahlt. Die resultierende Filmdicke beträgt ca. 40 µm.

15 Minuten nach der Härtung wird der Yellowness Index (YI) nach ASTM D 1925 gemessen. Dabei bedeuten höhere YI-Werte stärkere Verfärbung. Die Werte sind in Tabelle 1 zusammengefasst.

**Tabelle 1**

| UV-Absorber (1 %) | YI |
|---|---|
| UV-2 | 8,6 |
| UV-3 | 6,1 |
| UV-4 | 5,5 |
| UV-5 | 5,9 |
| UV-6 | 6,8 |
| | |
| V-1 | 21,5 |
| V-2 | 17,5 |

Man ersieht daraus, daß der Zusatz des erfindungsgemäßen UV-Absorbers UV-1 nur eine geringe Zunahme des YI bewirkt, während beide Vergleichsproben (Benztriazolderivate) eine starke Zunahme des YI bewirken.

### Beispiel 2 - UV-Härtung eines Klarlackes

Ein Klarlack wird bereitet aus 70 Teilen eines Tris(hydroxyethyl)isocyanurattriacrylates (Genomer® T 930), 30 Teilen 1,6-Hexandioldiacrylat und 2 Teilen 1-Benzoylcyclo-hexanol als Photoinitiator. Dazu kommt 1 Teil verschiedener, in Tabelle 2 angegebener UV-Absorber. Die Proben werden auf ein Aluminiumblech aufgetragen, das mit einem weissen Coil-coat beschichtet ist. Die Proben werden in einem UV-Bestrahlungsgerät der Fa. PPG mit 2 Lampen à 80 W/cm in zwei Durchgängen bei einer Bandgeschwindigkeit von 10 m/min bestrahlt und damit gehärtet. Es resultiert eine Schichtdicke von ca. 40 µm.

Nach einer Lagerzeit von 15 min wird der Yellowness-Index (YI) nach ASTM D 1925 gemessen. Die Ergebnisse sind in Tabelle 2 aufgeführt.

**Tabelle 2**

| UV-Absorber (1 %) | YI |
|---|---|
| UV-1 | 6,3 |
| UV-2 | 3,8 |
| UV-3 | 2,7 |
| UV-5 | 2,8 |
| | |
| V-1 | 16,3 |
| V-2 | 12,5 |

Wie in Beispiel 1 zeigen auch bei der UV-Härtung die erfindungsgemässen UV-Absorber eine wesentlich geringere Verfärbung.

### Beispiel 3 - Witterungsbeständigkeit eines Klarlackes

Es wird wie in Beispiel 2 gearbeitet, jedoch werden 1,5 % (statt 1 %) UV-Absorber eingesetzt. Die Witterungsbeständigkeit der gehärteten Lacke wird in zwei verschiedenen UV-Bereichen getestet:
A) durch Bewitterung in einem QUV-Gerät der Fa. Q-Panel mit UVA-340-Lampen und bei einem Bewitterungscyklus von 8 h UV-Bestrahlung bei 70°C und 4 h Kondensation bei 50°C,
B) durch Bewitterung in einem UVCON-Gerät der Fa. Atlas mit UVB-313-Lampen bei einem Cyklus von 8 h UV-Bestrahlung bei 70°C und 4 h Kondensation bei 50°C.

Nach 200 h und 2000 h Bewitterung wird der Yellowness-Index der Lackproben gemessen. Die Ergebnisse sind in Tabelle 3 und 3a aufgeführt.

**Tabelle 3 -**

| UVA-Bewitterung | | |
|---|---|---|
| UV-Absorber (1,5 %) | YI nach 200 h | YI nach 2000 h |
| UV-1 | - 0,2 | - 0,5 |
| UV-2 | 0,7 | 2,3 |
| | | |
| V-3 | 3,5 | 5,6 |
| V-5 | 2,6 | 8,0 |

**Tabelle 3a -**

| UVA-Bewitterung | | |
|---|---|---|
| UV-Absorber (1,5 %) | YI nach 200 h | YI nach 2000 h |
| UV-1 | 0,7 | 0,7 |
| UV-2 | 1,1 | 3,0 |
| | | |
| V-3 | 4,6 | 23,5 |
| V-5 | 4,5 | 23,7 |

### Beispiel 4 - Witterungsbeständigkeit eines 2-Schicht-Metallic-Lackes

Mit einem weissen Coil-Coat beschichtete Aluminiumbleche wurden mit einem Silbermetallic-Einbrennlack auf Basis Polyester/Celluloseacetobutyrat/Melaminharz lackiert und bei 120°C gehärtet. Auf diesen Basis-Lack wird der in Beispiel 1 beschriebene Klarlack aufgebracht, dem 1 % UV-Absorber zugesetzt werden. Die Proben werden elektronenstrahlgehärtet wie in Beispiel 1 beschrieben.

Die gehärteten Proben werden in einem UVCON-Gerät der Fa. Atlas mit UVB-313-Lampen bei einem Cyklus von 4 h UV-Bestrahlung bei 60°C und 4 h Kondensation bei 50°C bewittert. Gemessen wird der Farbabstand ΔE nach DIN 6174 nach 900 h Bewitterung gegenüber dem Anfangswert. Die Ergebnisse sind in Tabelle 4 aufgeführt.

**Tabelle 4**

| UV-Absorber (1 %) | ΔE nach 900 h |
|---|---|
| UV-2 | 0,5 |
| UV-4 | 0,7 |
| | |
| V-3 | 1,9 |
| V-6 | 2,0 |

### Beispiel 5 - Witterungsbeständigkeit eines 2-Schicht-Metallic-Lackes

Es wird wie in Beispiel 4 gearbeitet, jedoch wird der Decklack durch UV-Licht gehärtet, wie in Beispiel 2 beschrieben.

Die gehärteten Proben werden in einem UVCON-Gerät der Fa. Atlas mit UVB-313-Lampen bei einem Cyklus von 4 h UV-Bestrahlung bei 60°C und 4 h Kondensation bei 50°C 1600 h bewittert. Vor und nach der Bewitterung wird der Yellowness-Index der Proben gemessen. Tabelle 5 gibt die Differenz dieser beiden Messungen (Δ YI)an.

**Tabelle 5**

| UV-Absorber (1 %) | ΔYI nach 1600 h |
|---|---|
| UV-1 | 0,4 |
| UV-2 | 0,3 |
| UV-3 | 1,6 |
| UV-5 | 1,0 |
| | |
| V-1 | 3,1 |
| V-2 | 3,1 |
| V-4 | 3,1 |
| V-5 | 2,5 |

## Patentansprüche

1. Strahlenhärtbare lichtstabilisierte Zusammensetzung, enthaltend
A) ein Bindemittel basierend auf mindestens einer ethylenisch ungesättigten monomeren oder oligomeren Verbindung, ausgenommen ein Bindemittel basierend auf ungesättigten Alkydharzen einschließlich der Kombinationen ungesättigter Polyester mit vernetzenden Monomeren, und
B) mindestens einen UV-Absorber der Formel I 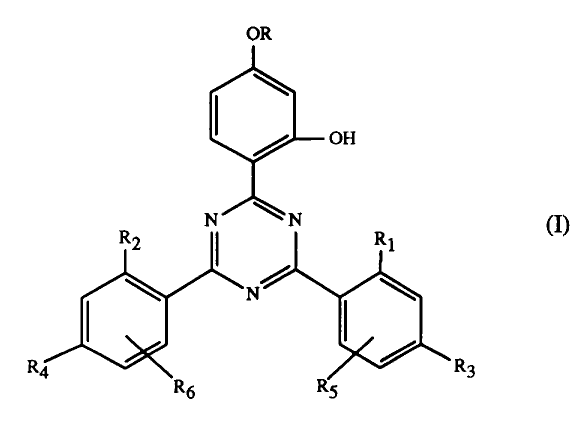
worin R Wasserstoff oder C₁-C₁₈-Alkyl bedeutet,
R₁ und R₂ unabhängig voneinander H, OH, C₁-C₁₂-Alkyl, Halogen oder Halogenmethyl bedeuten,
R₃ und R₄ unabhängig voneinander H, OH, C₁-C₁₂-Alkyl, C₁-C₁₈-Alkoxy oder Halogen bedeuten und
R₅ und R₆ unabhängig voneinander H, C₁-C₁₂-Alkyl oder Halogen bedeuten.

2. Strahlenhärtbare Zusammensetzung gemäß Anspruch 1, dadurch gekennzeichnet, daß das Bindemittel mehrere ethylenisch ungesättigte Verbindungen enthält.

3. Strahlenhärtbare Zusammensetzung gemäß Anspruch 1, enthaltend einen UV-Absorber der Formel I, worin R Wasserstoff oder C₁-C₁₂-Alkyl ist, R₁ und R₂ unabhängig voneinander H, OH, Halogen oder C₁-C₄-Alkyl bedeuten, R₃ und R₄ unabhängig voneinander H, OH, C₁-C₄-Alkyl, C₁-C₄-Alkoxy oder Halogen bedeuten und R₅ und R₆ unabhängig voneinander H oder C₁-C₄-Alkyl bedeuten.

4. Strahlenhärtbare Zusammensetzung gemäß Anspruch 1, enthaltend einen UV-Absorber der Formel I, worin R Wasserstoff oder C₁-C₁₂-Alkyl ist, R₁, R₂, R₃ und R₄ unabhängig voneinander H, CH₃ oder Cl bedeuten, und R₅ und R₆ Wasserstoff bedeuten.

5. Strahlenhärtbare Zusammensetzungen gemäss Anspruch 1, enthaltend einen UV-Absorber der Formel I, worin R Octyl ist, R₁, R₂, R₃ und R₄ Methyl sind und R₅ und R₆ Wasserstoff sind.

6. Strahlenhärtbare Zusammensetzung gemäß Anspruch 1, enthaltend 0,01 bis 5 Gew.-%, bezogen auf das Bindemittel, eines UV-Absorbers der Formel I.

7. Strahlenhärtbare Zusammensetzung gemäß Anspruch 1, enthaltend außerdem C) mindestens einen Photoinitiator.

8. Strahlenhärtbare Zusammensetzung gemäß Anspruch 7, enthaltend 0,1 bis 10 Gew.-%, bezogen auf das Bindemittel, eines Photoinitiators oder Photoinitiatorgemisches.

9. Strahlenhärtbare Zusammensetzung gemäß Anspruch 1, enthaltend außerdem D) mindestens ein Lichtschutzmittel aus der Klasse der sterisch gehinderten Amine.

10. Strahlenhärtbare Zusammensetzung gemäß Anspruch 9, enthaltend als Komponente D) ein Lichtschutzmittel aus der Klasse der 2,2,6,6-Tetramethylpiperidine.

11. Strahlenhärtbare Zusammensetzung gemäß Anspruch 9, enthaltend als Komponente D) 0,01 bis 5 Gew.-%, bezogen auf das Bindemittel, eines Lichtschutzmittels aus der Klasse der sterisch gehinderten Amine.

12. Verwendung einer in Anspruch 1 definierten Zusammensetzung als Überzugsmittel.

13. Verfahren zur Strahlenhärtung eines Überzugsmittels auf Basis eines ethylenisch ungesättigten Bindemittels, dadurch gekennzeichnet, dass man diesem mindestens einen UV-Absorber der Formel I gemäß Anspruch 1 einverleibt, es auf ein Substrat aufbringt und mit Elektronen bestrahlt.

14. Verfahren zur Strahlenhärtung eines Überzugsmittels auf Basis eines ethylenisch ungesättigten Bindemittels, dadurch gekennzeichnet, dass man diesem mindestens einen UV-Absorber der Formel I gemäß Anspruch 1 sowie einen Photoinitiator, zusetzt, es auf ein Substrat aufbringt und mit UV-Licht bestrahlt.

15. Ein nach dem Verfahren des Anspruches 13 oder 14 gehärteter Überzug.

16. Verwendung von in Anspruch 1 definierten Verbindungen der Formel I als UV-Absorber in strahlenhärtbaren Zusammensetzungen basierend auf mindestens einer ethylenisch ungesättigten monomeren oder oligomeren Verbindung, ausgenommen Bindemittel basierend auf ungesättigten Alkydharzen einschließlich der Kombinationen ungesättigter Polyester mit vernetzenden Monomeren.

## Claims

1. A radiation-curable, light-stabilised composition comprising
A) a binder based on at least one ethylenically unsaturated monomeric or oligomeric compound, with the exception of a binder based on unsaturated alkyd resins, including the combinations of unsaturated polyesters with crosslinking monomers, and
B) at least one UV absorber of formula I 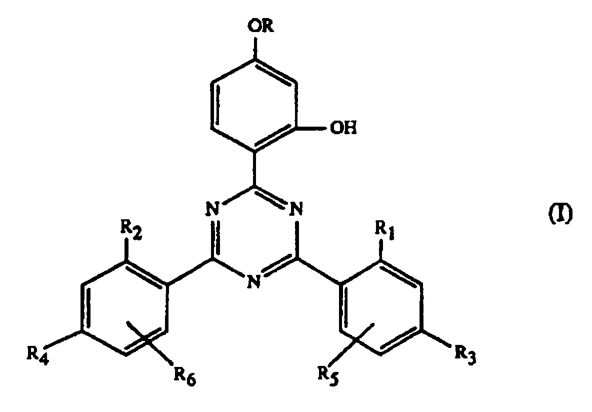
wherein R is hydrogen or C₁-C₁₈alkyl,
R₁ and R₂ are each independently of the other H, OH, C₁-C₁₂alkyl, halogen or halomethyl,
R₃ and R₄ are each independently of the other H, OH, C₁-C₁₂alkyl, C₁-C₁₈alkoxy or halogen, and
R₅ and R₆ are each independently of the other H, C₁-C₁₂alkyl or halogen.

2. A radiation-curable composition according to claim 1, wherein the binder contains a plurality of ethylenically unsaturated compounds.

3. A radiation-curable composition according to claim 1, which contains a UV absorber of formula I wherein R is hydrogen or C₁-C₁₂alkyl, R₁ and R₂ are each independently of the other H, OH, halogen or C₁-C₄alkyl, R₃ and R₄ are each independently of the other H, OH, C₁-C₄alkyl, C₁-C₄alkoxy or halogen, and R₅ and R₆ are each independently of the other H or C₁-C₄alkyl.

4. A radiation-curable composition according to claim 1, which contains a UV absorber of formula I wherein R is hydrogen or C₁-C₁₂alkyl, R₁, R₂, R₃ and R₄ are each independently of one another H, CH₃ or Cl, and R₅ and R₆ are hydrogen.

5. A radiation-curable composition according to claim 1, which contains a UV absorber of formula I wherein R is octyl R₁, R₂, R₃ and R₄ are methyl, and R₅ and R₆ are hydrogen.

6. A radiation-curable composition according to claim 1, which contains 0.01 to 5 % by weight, based on the binder, of a UV absorber of formula I.

7. A radiation-curable composition according to claim 1, which additionally comprises C) at least one photoinitiator.

8. A radiation-curable composition according to claim 7, which comprises 0.1 to 10 % by weight, based on the binder, of a photoinitiator or mixture of photoinitiators.

9. A radiation-curable composition according to claim 1, which additionally comprises D) at least one light stabiliser from the class of the sterically hindered amines.

10. A radiation-curable composition according to claim 9, which comprises as component D) a light stabiliser from the class of the 2,2,6,6-tetramethylpiperidines.

11. A radiation-curable composition according to claim 9, which contains 0.01 to 5 % by weight, based on the binder, of a light stabiliser from the class of the sterically hindered amines as component D).

12. Use of a composition defined in claim 1 as coating composition.

13. A process for radiation-curing a coating composition based on an ethylenically unsaturated binder, which comprises incorporating therein at least one UV absorber of formula I according to claim 1, applying said composition to a substrate and irradiating the coated substrate with electrons.

14. A process for radiation-curing a coating composition based on an ethylenically unsaturated binder, which comprises adding thereto at least one UV absorber of formula I according to claim 1 and a photoinitiator, applying said composition to a substrate and irradiating the coated substrate with UV light.

15. A coating cured by the process of claim 13 or 14.

16. Use of a compound of formula I defined in claim 1 as UV absorber in radiation-curable compositions based on at least one ethylenically unsaturated monomeric or oligomeric compound, with the exception of a binder based on unsaturated alkyd resins, including the combinations of unsaturated polyesters with crosslinking monomers.

## Revendications

1. Compositions stabilisées contre la lumière durcissables par irradiation contenant
A) au moins un agent liant à base d'un au moins composé monomère ou oligomère à insaturation éthylénique, à l'exception d'un agent liant à base de résines alkydes y compris des combinaisons de polyesters insaturés avec des monomères réticulants, et
B) au moins un absorbeur d'UV de formule I 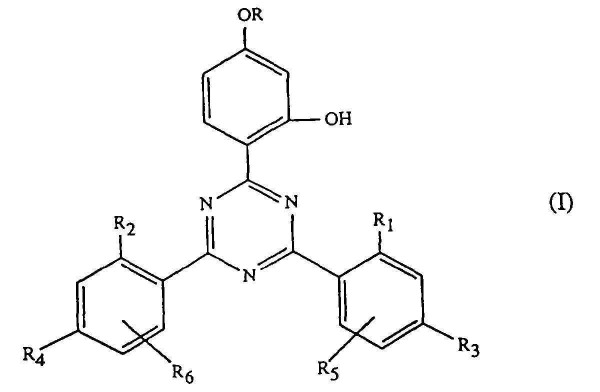 dans laquelle
R représente l'hydrogène ou alkyle en C₁-C₁₈,
R₁ et R₂, indépendamment l'un de l'autre, représentent H, OH, alkyle en C₁-C₁₂, halogène ou halogénométhyle,
R₃ et R₄, indépendamment l'un de l'autre, représentent H, OH, alkyle en C₁-C₁₂, alcoxy en C₁-C₁₈ ou halogène et
R₅ et R₆, indépendamment l'un de l'autre, représentent H, alkyle en C₁-C₁₂ ou halogène.

2. Composition durcissable par irradiation selon la revendication 1, caractérisée en ce que l'agent liant contient plusieurs composés à insaturation éthylénique.

3. Composition durcissable par irradiation selon la revendication 1, contenant un absorbeur d'UV de formule I, dans laquelle R représente l'hydrogène ou alkyle en C₁-C₁₂, R₁ et R₂, indépendamment l'un de l'autre, représentent H, OH, halogène ou alkyle en C₁-C₄, R₃ et R₄, indépendamment l'un de l'autre, représentent H, OH, alkyle en C₁-C₄, alcoxy en C₁-C₄ ou halogène et R₅ et R₆, indépendamment l'un de l'autre, représentent H ou alkyle en C₁-C₄.

4. Composition durcissable par irradiation selon la revendication 1, contenant un absorbeur d'UV de formule I, dans laquelle R représente l'hydrogène ou alkyle en C₁-C₁₂, R₁, R₂, R₃ et R₄, indépendamment l'un de l'autre, représentent H, CH₃ ou Cl, et R₅ et R₆ sont l'hydrogène.

5. Composition durcissable par irradiation selon la revendication 1, contenant un absorbeur d'UV de formule I, dans laquelle R est octyle, R₁, R₂, R₃ et R₄ sont méthyle et R₅ et R₆ sont l'hydrogène.

6. Composition durcissable par irradiation selon la revendication 1, contenant de 0,01 à 5% en poids, par rapport à l'agent liant, d'un absorbeur d'UV de formule I.

7. Composition durcissable par irradiation selon la revendication 1, contenant en outre C) au moins un photoamorceur.

8. Composition durcissable par irradiation selon la revendication 7, contenant de 0,1 à 10% en poids, par rapport à l'agent liant, d'un photoamorceur ou d'un mélange de photoamorceurs.

9. Composition durcissable par irradiation selon la revendication 1, contenant en outre D) au moins un agent photoprotecteur de la classe des amines à encombrement stérique.

10. Composition durcissable par irradiation selon la revendication 9, contenant comme constituant D un agent photoprotecteur de la classe des 2,2,6,6-tétraméthylpipéridines.

11. Composition durcissable par irradiation selon la revendication 9, contenant comme constituant D) de 0,01 à 5% en poids, par rapport à l'agent liant, d'un agent photoprotecteur de la classe des amines à encombrement stérique.

12. Utilisant d'une composition définie dans la revendication 1 comme enduit.

13. Procédé pour le durcissement par irradiation d'un enduit à base d'un agent liant à insaturation éthylénique, caractérisé en ce qu'on lui incorpore au moins un absorbeur d'UV de formule I selon la revendication 1, on l'applique sur un substrat et on irradie par des électrons.

14. Procédé pour le durcissement par irradiation d'un enduit à base d'un agent liant à insaturation éthylénique, caractérisé en ce qu'on lui ajoute au moins un absorbeur d'UV de formule I selon la revendication 1 ainsi qu'un photoamorceur, on l'applique sur un substrat et on irradie par la lumière UV.

15. Un enduit durci selon le procédé de la revendication 13 ou 14.

16. Utilisation des composés de formule I définis dans la revendication 1, comme absorbeurs d'UV dans des compositions durcissables par irradiation à base d'un au moins composé monomère ou oligomère à insaturation éthylénique, à l'exception des agents liants à base de résines alkydes insaturées, y compris les combinaisons de polyesters insaturés avec des monomères réticulants.
